# EUROPEAN PATENT SPECIFICATION

(11) **EP 4 274 509 B1**
(45) Date of publication and mention of the grant of the patent: **11.06.2025**
(21) Application number: 22700193.0
(22) Date of filing: 06.01.2022
(51) Int. Cl.: A61C 7/12, A61C 7/14, A61C 7/28

(54) **ORTHODONTIC ATTACHMENT DEVICE FOR REMOVABLE DENTAL APPLIANCES**
ORTHODONTISCHE BEFESTIGUNGSVORRICHTUNG FÜR ENTFERNBARE ZAHNÄRZTLICHE VORRICHTUNGEN
DISPOSITIF DE FIXATION ORTHODONTIQUE POUR APPAREILS DENTAIRES AMOVIBLES

(30) Priority: 08.01.2021 US 202163135176 P
(43) Date of publication of application: 15.11.2023
(73) Proprietor: Solventum Intellectual Properties Company, Maplewood, MN 55144 (US)
(72) Inventor: LAI, Ming-Lai, Saint Paul, Minnesota 55133-3427 (US); DUFOUR, Joseph R., Saint Paul, Minnesota 55133-3427 (US); SKAMSER, Daniel J., Saint Paul, Minnesota 55133-3427 (US)
(74) Representative: Vossius & Partner Patentanwälte Rechtsanwälte mbB
(86) International application number: PCT/IB2022/050085
(87) International publication number: WO 2022/149083

(56) References cited:
- WO-A1-2020/223384
- US-A- 5 470 228
- US-A- 5 746 592
- US-A1- 2011 244 413
- US-A1- 2018 049 847

## Description

### TECHNICAL FIELD

The present disclosure generally to orthodontic appliances, their preparation, and use.

### BACKGROUND

The field of orthodontics relates to repositioning a patient's teeth for improved function and aesthetic appearance. Orthodontic devices and treatment methods generally involve the application of forces to move teeth into a proper bite configuration, or occlusion. As one example, orthodontic treatment may involve the use of slotted appliances, known as brackets, which are fixed to the patient's anterior, cuspid, and bicuspid teeth. An archwire is typically placed in the slot of each bracket and serves as a track to guide movement of the teeth to desired orientations. The ends of the archwire are usually received in appliances known as buccal tubes that are secured to the patient's molar teeth. Such dental appliances remain in the mouth of the patient and are periodically adjusted by an orthodontist to check the process and maintain the proper force on the teeth until proper alignment is achieved.

There are numerous methods for selecting orthodontic appliances and archwires. Particular selection methods used by a practitioner are generally related to the type of orthodontic techniques that are expected to be employed during the course of orthodontic therapy. For example, one exemplary technique is known as the "straight wire" technique. This technique involves the use of brackets having slots that are designed to be in a common plane once the teeth have moved to desired, final positions. Although the slots of the brackets are not aligned at the beginning of treatment due to the various malpositions of the teeth, the inherent resilience of the archwire provides a restoring force that tends to move the archwire and hence the slots of the associated brackets into alignment in a common plane.

In the straight wire technique described above, each of the selected brackets has a certain "prescription" that represents particular characteristics of the bracket. The prescription can include numerous different aspects or features of the bracket, such as the size of the archwire slot, as well as orientation of a slot relative to a base of the bracket that is intended to be mounted on a surface of the tooth. The prescription describes the orientation of the archwire slot relative to the base of the bracket and may include values for torque, angulation, and rotation. In terms of tooth movement, "torque" is often defined as tipping movement of the long axis of the tooth in a buccolabial-lingual direction (i.e., in directions toward and away from the patient's lips or cheeks and the patient's tongue), "angulation" is defined as tipping movement of the long axis of the tooth in mesial and distal directions (i.e., in directions toward and away from the center of the patient's dental arch), and "rotation" is defined as rotational movement of the tooth about its long axis.

Orthodontic treatment may also involve the use of alignment trays, such as clear or transparent, polymer-based tooth positioning trays, often referred to as clear tray aligners (CTAs). For example, orthodontic treatment with CTAs may include forming a tray having shells that engage one or more teeth. Each shell may be deformed from an initial position of a tooth, e.g., a malocclusion position. The deformed position of a respective shell of the CTA may apply a force to a respective tooth toward a desired position of the tooth that is an intermediate position between the initial position and a final position resulting from the orthodontic treatment. In some examples, small attachments may be bonded to the teeth to improve force application or achieve desired tooth movements. Proper placement of attachments may ensure proper engagement and interaction of the attachment with a designed feature on the CTAs. The designed feature may provide a desired physical leverage which creates a desired force on a tooth to produce a specific movement of the tooth during treatment. Attachments are typically constructed of varying materials, shapes and sizes, and can be bonded to the labial or lingual surfaces of teeth in order to interact with CTAs and removable appliances in a variety of different ways. Attachments can be applied to a patient's teeth prior to treatment with aligners. Attachments may also be fabricated prior to tooth attachment. Attachments may also be substantially assembled at the orthodontic practitioner's office prior to, or in conjunction with, positioning on the patient's tooth (e.g., molded composites, etc.).

Similar treatments may be effectuated with a resilient polymeric arch member dimensioned to extend over either the labial or lingual surfaces of the teeth of the arch but lacking a tray structure (see e.g., US Patent Publication No. 2005/0277084).

US 2018/049847 A1 discloses an orthodontic appliance including a first anchor and a second anchor each including an anchor coupling and a base adapted to connect the respective anchor to a surface of a first tooth and a second tooth respectively. The appliance can also include an arch member including an arch member body and first and second arch member couplings integral with the body, the arch member body including a cross-sectional geometry that varies along a length of the body. The first arch member coupling can be releasably connectable to the anchor coupling of the first anchor and the second arch member coupling can be releasably connectable to the anchor coupling of the second anchor. The arch member body can include a first nonlinear portion between the first arch member coupling and the second arch member coupling.

### SUMMARY

The present disclosure generally relates to orthodontic attachments, their preparation, and use. Generally, orthodontic attachments may be bonded to the teeth by a direct bonding procedure or an indirect bonding procedure. In the direct bonding procedure, the appliance is commonly grasped with a pair of tweezers or other hand instrument and placed by the practitioner on the surface of the tooth in its desired location, using a quantity of adhesive to fix the appliance to the tooth. In the indirect bonding procedure, a transfer tray is constructed with wall sections having a shape that matches the configuration of at least part of the patient's dental arch, and orthodontic appliances are releasably connected to the tray at certain, predetermined locations. After an adhesive is applied to the base of each appliance, the tray is placed over the patient's teeth and remains in place until the adhesive has hardened. The tray is then detached from the teeth as well as from the appliances such that the appliances previously connected to the tray are bonded to the respective teeth at their intended, predetermined locations.

The present invention relates to an orthodontic attachment device according to claim 1 and to a set of orthodontic attachment devices according to claim 7.

Attachments of the present disclosure combine the optimal practices of the traditional bracket-wire system and more recent resilient appliance (e.g., CTAs and polymeric bands) systems. The attachments include prescribed in/outs, torques and angulations designed utilizing the straight wire methodology for determining the bonding location on a particular tooth of the dental arch. By fixing attachments according to the present disclosure, the most prominent portion of the tray or band for all teeth in the labial direction will be relatively straight (in/out) and flat (torque) at the conclusion of the treatment. The marriage of bracket prescription with attachment placement can help the orthodontist to visualize the treatment outcome with the tray or band on the patient. Patient comfort can be another advantage because of the straightness of the tray and installation of a tray or band on the arch may be made easier with the attachments following the typical tooth angulations.

In one aspect, the present disclosure provides, an orthodontic attachment device comprising an attachment body and a bonding surface underlying the body; wherein the attachment body has the general shape of an inverted frustrum. The attachment device may lack a flared base. The attachment body may a generally trapezoidal cross-sectional shape along either or both of a mesial-distal or occlusal-gingival axis.

In one aspect, a set of orthodontic attachment devices comprising: A first attachment having a first attachment body and a first bonding surface, wherein the first attachment body has a first prescription including at least two defined prescription elements selected from in/out, torque and angulation; and a second attachment having a second attachment body and a second bonding surface, wherein the second attachment body has a second prescription including at least two defined prescription elements selected from in/out, torque and angulation, wherein the first prescription is different from the second prescription.

As used herein, "anterior teeth" includes the central incisors, lateral incisors, canines, and first bicuspids.

As used herein, "posterior teeth" includes the second bicuspid, the first molar, the second molar, and the third molar (if patient still retains wisdom teeth).
The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure.
In this application, terms such as "a", "an", and "the" are not intended to refer to only a singular entity but include the general class of which a specific example may be used for illustration. The terms "a", "an", and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise. The term "and/or" means one or all of the listed elements or a combination of any two or more of the listed elements.

Also herein, all numbers are assumed to be modified by the term "about" and preferably by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used.
Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties). The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the particular circumstance rather than requiring absolute precision or a perfect match.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

The details of one or more examples of this disclosure are set forth in the accompanying drawings and the description below. Other features, objects, and advantages of this disclosure will be apparent from the description and drawings, and from the claims.

### BRIEF DESCRIPTION OF DRAWINGS

Fig. 1 is a perspective view of a removable dental appliance coupled to a dental arch, according to embodiments of the present disclosure;
Fig. 2 is another perspective view of the removable dental appliance of Fig.1;
Fig. 3 is a conceptual diagram illustrating a plurality of attachments on a dentition of a patient;
Fig. 4 is a perspective view of a removable dental appliance coupled to a dental arch, according to embodiments of the present disclosure;
Fig. 5 is a perspective view of a removable dental appliance coupled to a dental arch, according other embodiments of the present disclosure;
Fig. 6 is another perspective view of the removable dental appliance of Fig.5;
Fig. 7 is a perspective view of an attachment according to embodiments of the present disclosure;
Fig. 8 is a gingival edge view of the attachment of Fig. 7;
Fig. 9 is a mesial side view of the attachment of Figs. 7 and 8;
Fig. 10 is a facial view of the attachment of Figs. 7-9;
Fig. 11 is a perspective view of an attachment according to embodiments of the present disclosure;
Fig. 12 is a gingival edge view of the attachment of Fig. 11;
Fig. 13 is a mesial side view of the attachment of Figs. 11 and 12;
Fig. 14 is a facial view of the attachment of Figs. 11-13; and
Fig. 15 is a perspective view of an attachment according to embodiments of the present disclosure;
Fig. 16 is a facial view of the attachment of Fig. 15;
Fig. 17 is an occlusal edge view of the attachment of Figs. 15 and 17;
Fig. 18 is a mesial side view of the attachment of Figs. 15-17; and
Fig. 19 is a perspective view of a transfer tray for assisting in the placement of attachments of the present disclosure.

Repeated use of reference characters in the specification and drawings is intended to represent the same or analogous features or elements of the disclosure. It should be understood that numerous other modifications and examples can be devised by those skilled in the art, which fall within the scope of the invention. The figures may not be drawn to scale.

### Directional Definitions

As used herein:
"Mesial" means in a direction toward the center of the patient's curved dental arch.
"Distal" means in a direction away from the center of the patient's curved dental arch.
"Occlusal" means in a direction toward the outer tips of the patient's teeth.
"Gingival" means in a direction toward the patient's gums or gingiva.
"Facial" means in a direction toward the patient's lips or cheeks.
"Lingual" means in a direction toward the patient's tongue.

### DETAILED DESCRIPTION

The disclosed articles, systems, and techniques include tooth attachments configured for use with common resilient appliances, such as CTAs and polymeric arch members. The attachments may have a prescribed, preformed shape that is similar to common orthodontic bracket prescriptions. The attachments may be directly bonded to the teeth or delivered via a transfer tray (i.e., via indirect bonding). For example, the transfer tray may include a body defining a shell configured to receive an outer surface of a tooth of a patient and a recess extending away from a surface defining shell. The attachment can be retained in the recess of the tray body.

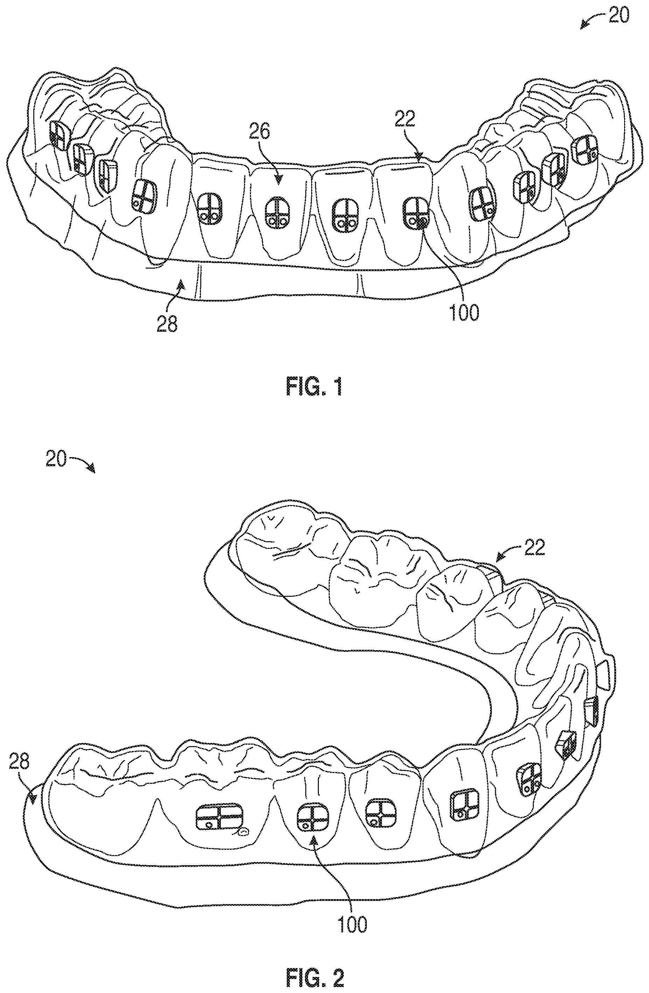

A removable dental appliance constructed according to one embodiment of the present disclosure is illustrated in Figs. 1-3 and is broadly designated by the numeral 20. In Fig. 1, the illustrated dental arch 28 is an exemplary the mandibular or lower dental arch although it should be understood in this regard that the appliance 20 (as well as all other appliances depicted or described herein) may be adapted for use with the maxillary or upper dental arch, as well. The treatment apparatus includes an orthodontic tray aligner (i.e., CTA) 22 and a set of orthodontic attachments 100. The attachments 100 are each affixed to a respective tooth 26 of an orthodontic patient's dental arch 28. The attachments can be attached to the surface of corresponding tooth using any suitable technique or combination of techniques. For example, the attachment 100 can be bonded to the surface of the tooth using a suitable adhesive or cement. The attachment 100 need not be adhesively bonded and may, as an example be welded to an orthodontic band and subsequently secured to a respective tooth using a suitable band cement. The tray aligner 22 includes a plurality of cavities shaped to receive one or more teeth in the lower arch. In some embodiments, in an orthodontic aligner tray at least some of the cavities shaped and configured to apply force to the teeth of the patient to resiliently reposition one or more teeth from one tooth arrangement to a successive tooth arrangement. In the case of a retainer tray, the cavities are shaped and configured to receive and maintain the position of one or more teeth that have previously been aligned.

The removable dental appliance 20 of this embodiment and the appliances of other embodiments, unless otherwise indicated, are described herein using a reference frame attached to a labial surface of a tooth on the upper or lower jaw. Consequently, terms such as labial, lingual, mesial, distal, occlusal, and gingival used to describe the appliance 20 and its attachments 100 are relative to the chosen reference frame. The embodiments, however, are not limited to the chosen reference frame and descriptive terms, as the appliance 20 may be used on other teeth and in other orientations within the oral cavity. For example, the appliance 20 may also include attachments coupled to the lingual surface of the tooth. Those of ordinary skill in the art will recognize that the descriptive terms used herein may not directly apply when there is a change in reference frame. Nevertheless, the embodiments are intended to be independent of location and orientation within the oral cavity and the relative terms used to describe embodiments of the orthodontic bracket are to merely provide a clear description of the embodiments in the drawings.

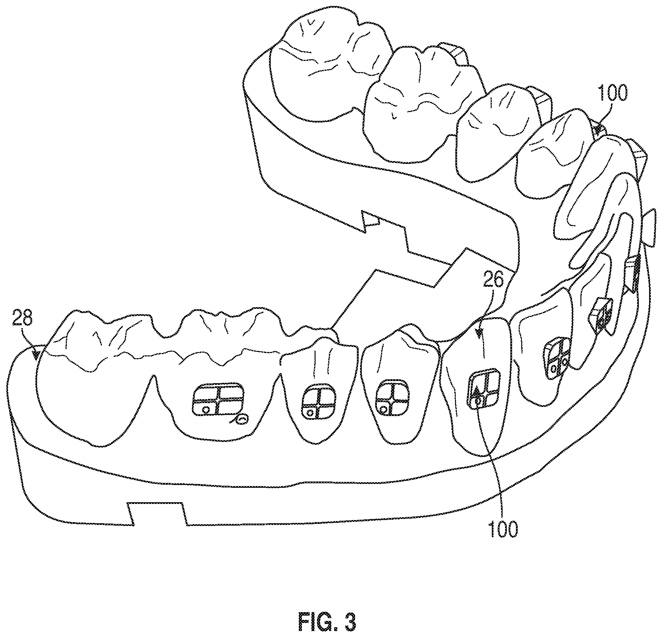

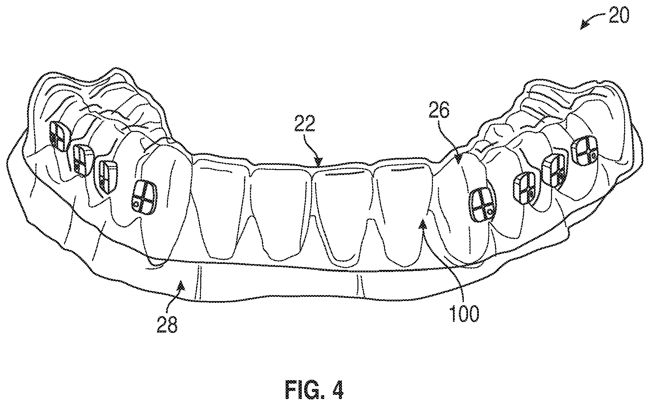

Fig. 3 is an illustration somewhat similar to Figs. 1 and 2, except that the tray aligner 22 has been removed. As depicted, the attachments 100 are directly bonded to the enamel surface of the patient's teeth 26. Also as depicted, each tooth 26 of the dental arch 28 receives an attachment 100 except the first molar, although alternative arrangements are also possible. For example, the attachments 100 may be attached to all of the teeth 26 in the dental arch 28 except for the molar teeth or may be attached to only certain selected teeth as may be desired by the practitioner or otherwise prescribed according to an orthodontic treatment plan. Fig. 4 is thus also somewhat similar to Fig. 1, except that lateral and central teeth do not include any attachments 100.

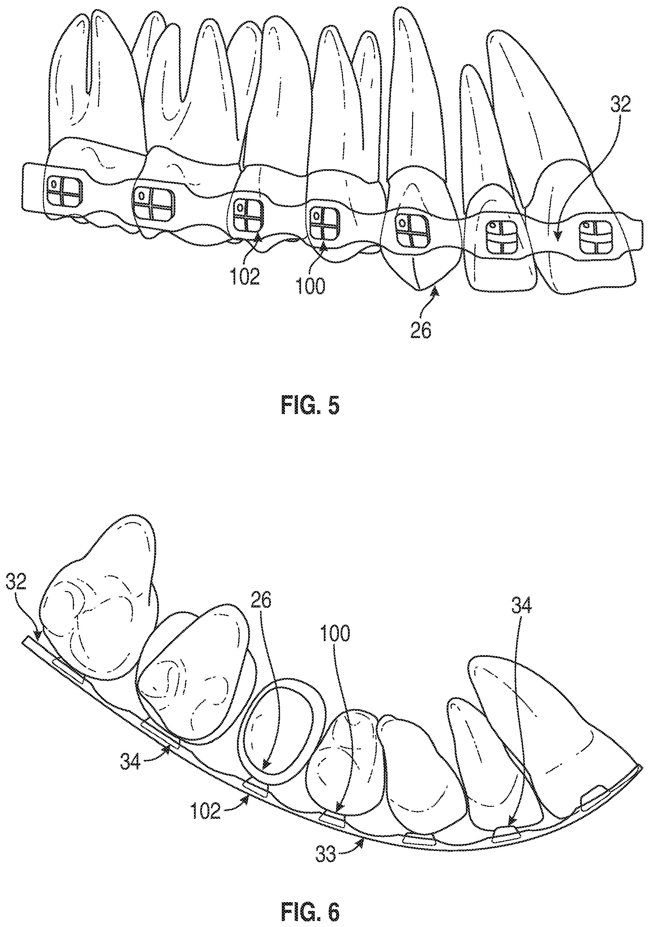

Figs. 5 and 6 depict another illustration of a removable dental appliance including attachments of the present disclosure, except that the treatment apparatus includes a polymeric arch member 32 rather than an aligner tray and the arch member 32 is attached to the maxillary or upper dental arch. The arch member 32 may be made of a single layer of material having sufficient resiliency to receive the attachments 100 or a multi-component material comprising multiple layers. The arch member 32 includes a series of receptacles 34 that are spaced apart from each other along the length of the arch member 32. Each of the receptacles 34 receives the body 102 of a respective attachment appliance 100. Each of the receptacles 34 has a configuration adapted to releasably receive the body 102 in e.g., snap-fit relation. Consequently, the arch member 32 can be disconnected from the appliances 100 when desired.

The polymeric arch member 32 can include any suitable cross-sectional geometry, e.g., shape, area, orientation, etc. The cross-sectional geometry can be constant or vary along a length of the arch member 32. The cross-sectional shape (e.g., triangular, rectangular, elliptical, etc.), of the arch member can be uniform along a length of the body, or in other implementations the shape may vary. Further, the polymeric arch member 32 can include a uniform cross-sectional area or a cross-sectional area that varies along the length of the arch. As depicted, the arch member 32 has a buccolabial surface 33 defining a continuous arc about the dental arch. As depicted, the buccolabial surface 33 exist in a plane substantially perpendicular to the occlusal plane of the arch. At the very least, the buccolabial surface will typically be substantially parallel to a plane defined by the facial surfaces of the attachments. The region of the arch member 32 between any two adjacent attachments 100 follows the same curvature as the arch member adjacent the receptacles. The inner surface of the arch member 32 may be spaced facially from the labial surfaces of the teeth.

The exemplary receptacles 34 surround the body 102 of each attachment 100 along the each of the facial occlusal, mesial, gingival and distal sides thereof. However, other constructions are also possible. For example, the receptacles may extend completely through the arch member 32 such that the receptacles comprise apertures and facial surfaces of the attachments 100 are exposed when viewing the apparatus 20 towards a lingual direction. In certain circumstances, the receptacle may extend over only a portion of the exterior surfaces of the attachment body 102 to effectuate desired movement, a configuration that may ease disengagement of the arch member. Both the receptacles and the attachments bodies 102 have a configuration that permits effecting tooth movement along or about multiple axes as desired. To this end, the attachment bodies 102 and the receptacles 34 preferably have complimentary polygonal shapes, matching key and keyway shapes or other interlocking configurations that facilitate transmitting the desired forces from the arch member 32 to the attachment 100 and ultimately to the underlying teeth.

Typically, the arch member 32 has a geometry when relaxed that generally corresponds to the geometry necessary to move the teeth to the desired in positions. When the arch member 32 is placed on the attachments 100, however, the geometry of the arch member 32 is changed to a temporary shape corresponding to the shape of the tooth arrangement prior to reaching the desired arrangement, such as the current tooth arrangement. The resilient properties of the polymeric material function to exert forces on the teeth 26 as necessary to shift the teeth to the desired arrangement.

Preferably, the arch member 32 is connected to the attachments 100 such that the arch member 32 may exert forces on the appliances 100 and hence on the underlying teeth 26 in a number of different directions. For example, the arch member 32 can exert forces as may be needed to move the attachments 100 with six degrees of freedom in either or both translation and rotation with respect to three mutually perpendicular reference axes. As a result, the teeth 26 may be subjected to tipping, torquing or angulation movements as desired.

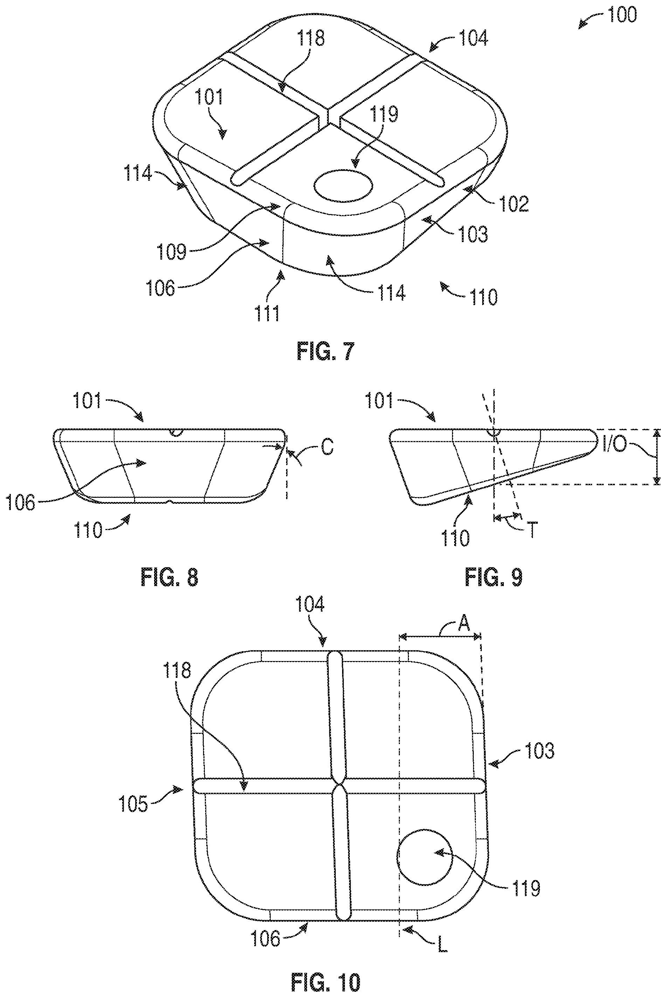

Figs. 7-10 illustrate an example attachment appliance 100 including an attachment body 102 and a bonding surface 110. Attachment body 102 ("body 102") is configured to be bonded to the teeth to improve force application by a CTA 22 or polymeric arch member 32 to achieve desired tooth movements. Body 102 may be sized such that body 102 is difficult or easy to manipulate, e.g., using a tool such as tweezers. For example, body 102 may have a maximum dimension of 10 mm or less, 8 mm or less, 6 mm or less, 4 mm or less, 3 mm or less, or 2 mm or less; and 0.25 mm or greater, 0.50 mm or greater, 0.75 mm or greater, 1.00 mm or greater, 1.25 mm or greater, 1.50 mm or greater, 1.75 mm or greater, 2.00 mm or greater, 2.50 mm or greater, 3.00 mm or greater, or 3.50 mm or greater.

A bonding surface 110 of body 102 may be shaped to correspond to a contour of a portion of a tooth of a patient. The bonding surface 110 can be shaped to bond at the facial axis of the clinical crown ("FACC") of a particular tooth of a particular dental arch. The FACC is defined as the curved line formed by the intersection of the mid-sagittal plane and the facial surface of a given tooth. In contrast to common orthodontic brackets configurations, the bonding surface 110 is not an underlying surface of a distinct base with any flanged portions thereof extending beyond or at least partially surrounding the perimeter of the body 102. Accordingly, the attachment 100 lacks what is referred to hereafter as a flared base. As depicted, the bonding surface 110 is the underside of the body 102, defined by the lingual surface of the attachment 100.

The bonding surface 110 may include compound curvature corresponding to the expected convex curvature of a particular tooth of the dental arch. Corresponding to the contour of the tooth may improve strength of an adhesive bond between body 102 and the tooth, reduce an amount of adhesive required for the bond, or both. In some examples, bonding surface 110 may include etched and/or embossed patterns intended to facilitate more secure bonding. In the same or other examples, the bonding surface may include glass grit or other particulate material. In the same or other examples, a perimeter edge of bonding surface 110 may be smooth, e.g., not etched or embossed, to facilitate removal from a tooth surface at the end of treatment.

The bonding surface 110 can have a tooth facing surface contour that is customized to fit any suitable surface of a tooth. For example, in one or more embodiments, the bonding surface 100 has a tooth-facing surface contour that is customized to fit a labial surface of a given tooth. Having a customized bonding surface 110 can allow the attachment 100 to be configured with a lower profile for patient comfort. Any suitable technique or combination of techniques can be utilized to form customized bondable anchors, e.g., the techniques described in U.S. Patent No. 10,136,965 (Wiechmann, et al.), and U.S. Patent Publication No. 2005/0277084 (Cinader, Jr., et al.). In one or more embodiments, the bonding surface 110 of one or more attachments 100 can include any suitably shaped surface that is not necessarily customized to fit a particular surface of a tooth, i.e., a "generic" base. In other implementations, the bonding surface 110 may include a fixed, compressible material to assist in filling gaps between the bonding base 110 and the tooth topography. Suitable compressible materials are described, for example, in US Patent No. 9,539,065 (Cinader, Jr.).

In some embodiments, the appliance 100 includes a frangible web located adjacent the bonding surface 110 that enables the appliance to be conveniently squeeze-debonded by fracturing a frangible web and pivoting the mesial and distal halves of the appliance 100 toward each other. Further options and advantages are described in issued U.S. Patent No. 5,366,372 (Hansen, et al.).

The attachment 100 (and all attachments described herein) may include a prescription. Examples of well-known prescriptions include those taught by Drs. McLaughlin, Bennett and Trevisi (the "MBT" brand bracket prescription), those taught by Dr. Ron Roth and those taught by Dr. Lawrence F. Andrews. The prescription for any attachment may include one or more prescription elements including in/out, torque, and angulation. In Fig. 7, the in-out dimension of the attachment 100 is designated I/O and represents the buccolingual height of the attachment 100 as measured between the facial surface 101 and the bonding surface 110 along a reference axis that is perpendicular to the facial surface 101 and passes through the mesial- distal and occlusal-gingival center of the appliance body 102.

Tooth angulation can be defined according to the teachings of Dr. Lawrence F. Andrews as the mesiodistal cant of the FACC relative to a line perpendicular to the occlusal plane (see, e.g., Straight Wire, The Concept and Appliance, by Lawrence F. Andrews, (L. A. Wells Co., (C)1989)). Attachment 100 angulation "A" may be defined as the particular angular orientation of the body 102 of the appliance relative to an imaginary vertical line "L" representative of the long axis of a tooth and extending through the mesial distal center of the bracket in order to provide tooth angulation.

Tooth torque may be defined as the buccolabial-lingual cant of the FACC when measured from a line perpendicular to the occlusal plane. Attachment 100 torque is typically provided by an angle formed in the tooth bonding surface 110, i.e., "torque in the base", represented by torque "T" in Fig. 9. Consequently, appliance torque may be defined as the orientation of the facial surface 101 relative to the bonding surface 110 such that the desired tooth torque is attained. This orientation varies from tooth to tooth and is selected to help ensure that each tooth is in the desired orientation when the appliances extend in a common plane that is parallel to the occlusal plane at the conclusion of treatment.

Table I sets out the preferred values according to the present disclosure for in/out, torque and angulation of appliances 100 for teeth of the upper or maxillary arch. Table II is a table similar to Table I except that Table II is directed to the lower or mandibular arch.

**TABLE I**

| Maxillary Arch | | | | | | | |
|---|---|---|---|---|---|---|---|
| | Central | Lateral | Cuspid | 1^{st} Bicuspid | 2^{nd} Bicuspid | 1^{st} Molar | 2^{nd} Molar |
| In/out, inch | 0.026 | 0.035 | 0.021 | 0.029 | 0.029 | 0.03 | 0.03 |
| torque, degrees | 17 | 10 | -7, +7 or 0 | -7 | -7 | -14 | -14 |
| angulation, degrees | 4 | 8 | 8 | 0 | 0 | 0 | 0 |

**TABLE II**

| Mandibular Arch | | | | | | | |
|---|---|---|---|---|---|---|---|
| | Central | Lateral | Cuspid | 1^{st} Bicuspid | 2^{nd} Bicuspid | 1^{st} Molar | 2^{nd} Molar |
| In/out, inch | 0.045 | 0.045 | 0.020 | 0.030 | 0.034 | 0.030 | 0.030 |
| torque, degrees | -6 | -6 | -6, +6 or 0 | -12 | -17 | -20 | -15 |
| angulation, degrees | 0 | 0 | 3 | 2 | 2 | 0 | 0 |

A suite of attachments 100 having prescribed values for I/O, torque, and angulation can allow a practitioner to design treatment according to common bracket placement principals, including the straight wire technique described above. Since the attachments are designed to have the prescribed in/outs, torques and angulations, the most prominent portion of the tray or arch member for all teeth in the labial direction will be relatively straight (in/out) and flat (torque) at the conclusion of the treatment. This can assist the orthodontist or other treating professional to visualize the treatment outcome with the treatment apparatus on the patient. Moreover, insertion of the tray or arch member can be made easier since the attachments follow the angulations of teeth. Furthermore, the prescription nature of the appliance allows for bulk manufacturing of attachments if desired, rather than custom or on demand manufacturing.

The mesial, occlusal, gingival, and distal facing side surfaces 103, 104, 105, 106 may include any suitable shape that is configured to transfer a force from a resilient appliance to the tooth, retain the resilient appliance on the tooth, or both. For example, one or more portions of the side surfaces 103, 104, 105, 106 may be hemispherical, rectilinear, curvilinear, or irregular in shape. In some examples, any one of the side surfaces 103, 104, 105, 106 may include one or more surface features, including, but not limited to, one or more tapers, undercuts, overhangs, recesses, negative drafts, or other features configured to engage or otherwise interact with a CTA, arch member, or a transfer tray. Tapered surfaces, for example, may reduce interference with the tongue, cheeks, and/or lips to improve comfort for the patient and/or reduce visibility of attachment body 102 when bonded to the teeth.

As depicted in the claimed invention, the attachment article 100 includes tapered surfaces on each of the mesial, occlusal, distal, and gingival side surfaces 103, 104, 105, 106. The tapering gives the attachment body 102 the overall shape of an inverted frustum, with the facial surface 101 as the base. Each tapered side surface 103, 104, 105, 106 presents a continuous taper between the perimeter edge 109 of the facial surface 101 and an edge 111 of the bonding surface 110. The tapering provides a continuous undercut beneath the facial surface 112 and a generally trapezoidal cross-sectional shape when viewed from both an occlusal-gingival and mesial-distal direction. (*See* Figs. 8 and 9). In other embodiments, only the mesial and distal surfaces include a taper. In other embodiment, only the occlusal and gingival side surfaces include a taper. In other embodiments, only the occlusal and mesial; or gingival and mesial; or occlusal and distal; or gingival and distal include a taper. In other embodiments, only one of the mesial, occlusal, gingival, or distal side surfaces include a taper.

Each side surface is inclined relative to a plane tangent an edge of the facial surface at an acute draft angle "C". In some embodiments, the angle C is at least about 30 degrees, at least about 25 degrees, at least about 20 degrees, at least about 15 degrees. In presently preferred embodiments, the draft angle "C" is no greater than about 1 degrees, no greater than about 12 degrees, no greater than about 13 degrees, no greater than about 14 degrees, no greater than about 15 degrees. In presently preferred circumstances, the angle C is between about 30 and about 1 degree. The angle C can be the same or different between any two side surfaces 103, 104, 105, 106.

The transition 114 between any two adjacent side surfaces (e.g., between mesial surface 103 and gingival surface 106) is preferably arcuate with a defined curvature, such that body 102 lacks sharp edges. The transition 114 can be a variety of radius sizes depending on the overall size of the body 102. Moreover, the side surfaces 103, 104, 105, 106 typically lack additional recesses, crevices, protrusions, or other changes in topography between the bonding surface 110 and the facial surface 101.

The facial surface 101 can include indicia identifying the attachment prescription. The indicia may include text, symbols, coloring, scribe lines, or the like. The indicia may also identify the desired orientation of the attachment once bonded to the tooth, such as a gingival marker 119. The indicia may also include at least one of mesial-distally and occusal-gingivally extending scribe lines 118.

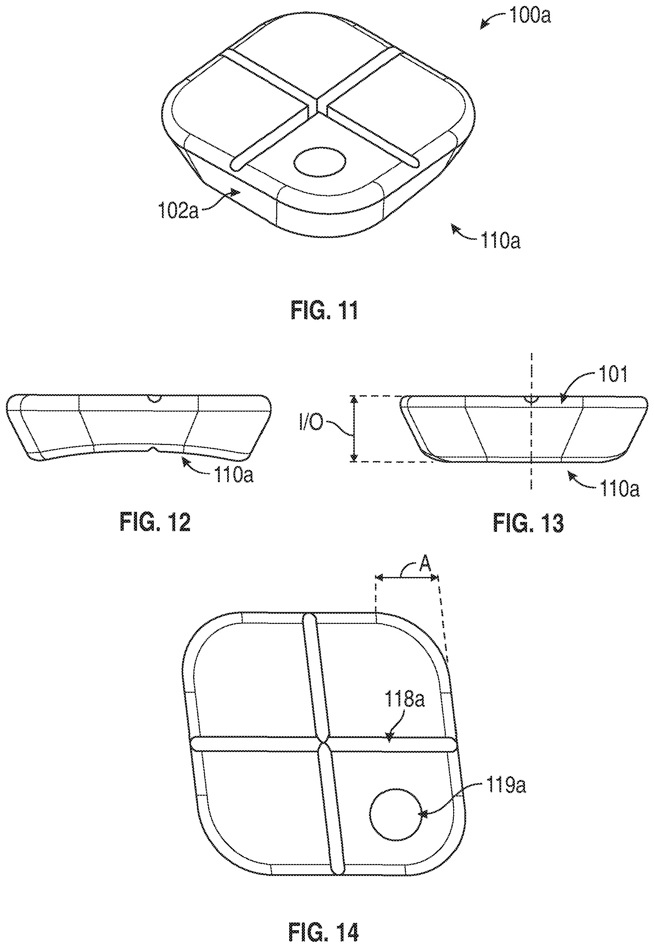

Figs. 11-14 illustrate another example attachment appliance 100a including an attachment body 102a and a bonding surface 110a. Appliance 100a has a reduced "in-out" I/O dimension, zero torque T and greater angulation A than appliance 100. The resulting appliance possess a lower facial-lingual profile and is well suited for bonding to a patient's cuspid tooth. The remaining features of attachment appliance 100a can be the same as appliance 100 and need not be repeated.

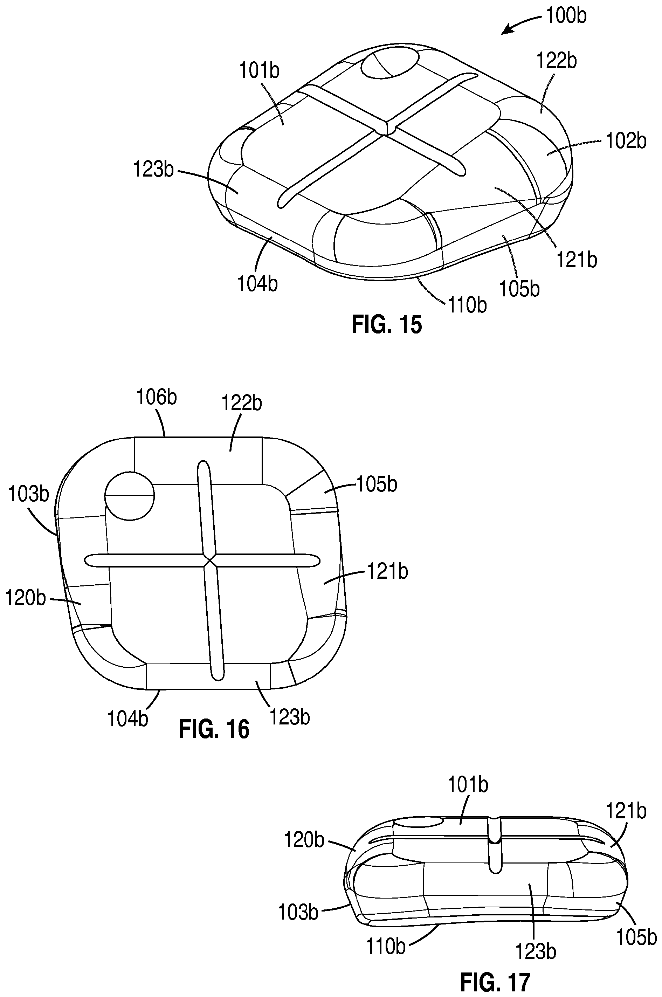

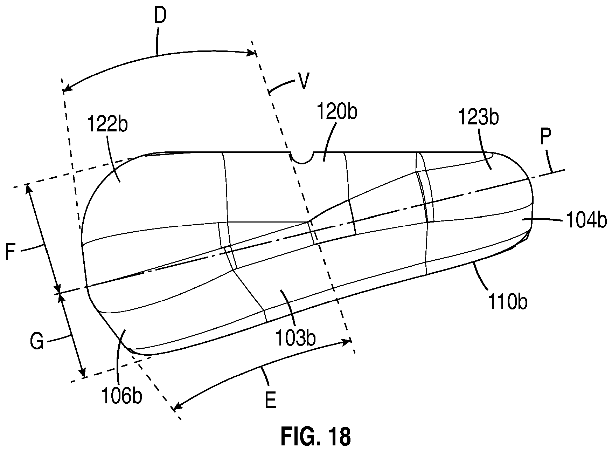

Figs. 15-18 illustrate another exemplary attachment appliance 100b including an attachment body 102b and a bonding surface 110b. The appliance 100b includes tapering mesial, distal, and gingival side surfaces 103b, 105b, and 106b. Appliance 100b includes body 102b geometry to aid in the placement and retention of a transfer tray, CTA or arch member. The body 102b includes a mesial arcuate region 120b and a distal arcuate region 121b. The arcuate regions 120b, 121b each provide a surface transition between the facial surface 101b and the respective mesial side surface 103b or distal side surface 105b. The transition regions 120b, 121b include defined, compound curvature having a greater average arc length than similar transitions 109 in attachment bodies 100 and 100a.

The body 102b may further include a gingival, arcuate transition region 122b including defined, compound curvature between the facial surface 101b and the gingival side 106b, as well as an occlusal, arcuate transition region 123b including defined, compound curvature between the facial surface 101b and the occlusal side 104b. The greater amount of body 102b surface area represented by arcuate surfaces, as compared to attachment bodies 100 and 100b, tends to aid the seating of the appliance 100b in a receptacle of a transfer tray, arch member, or CTA. Without wishing to be bound by theory, the arcuate surfaces can reduce the amount of frictional force necessary to engage the relatively rigid attachment with an elastomeric receptacle without necessarily sacrificing the undercuts necessary to retain the attachment appliance 100 to avoid unintentional disengagement.

The presence of arcuate transition regions 120b, 121b, 122b tends to separate the appliance body 102b into buccolabial and lingual (i.e., closer to the bonding surface) zones 130b, 131b. The buccolabial zone 130b includes the facial surface 101b and the transition regions 120b, 121b, 122b and the lingual zone 131b includes the side surface 103b, 104b, 105b, 106b, and bonding surface 110b. A plane P generally parallel to the bonding surface 110b and passing through the points where the transition region 122b meets tapered gingival edge 106b separates the buccolabial zone 130b from the lingual zone 131b.

The labial zone 103b of the attachment usually slopes at an angle "D" relative to a vertical axis "V" that is normal to the attachment bonding surface. The lingual zone also forms an angle, "E", with the vertical axis V. The labial zone has a maximum thickness of F, as measured between the plane P and the facial surface, and lingual zone has a maximum thickness of G, as measured between the plane P and the bonding surface 110b. For easy receptacle engagement with the attachment and good retention capability, typically D ≤ E and F ≥ G. The thickness of labial zone, depending on torque prescription, may have an increasing taper in the gingival direction. The relatively thinner occlusal region of the appliance body again favors easier insertion, while the thicker gingival regions may aid in receptacle retention.

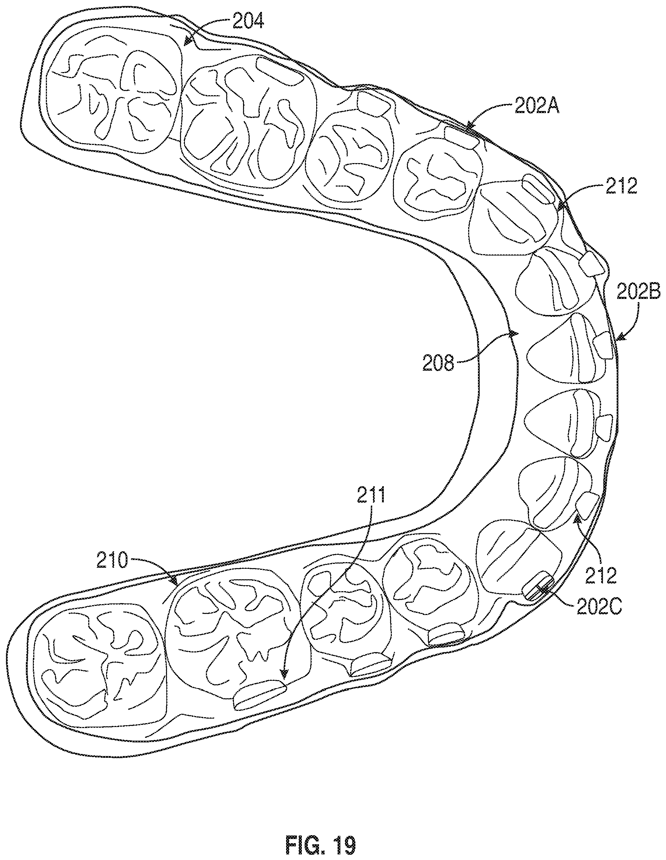

FIG. 19 is a conceptual diagram illustrating an example orthodontic system 200 including a plurality of attachments 202A, 202B, and 202C (collectively, attachments 202) and a transfer tray 204 configured to receive attachments 202. In some examples, orthodontic system 200 defines a kit. Attachments 202 may be the same as or substantially similar to any attachment 100, 100a, or 100b or variation thereof contemplated above.

Transfer tray 204 is configured to receive attachments 202. Transfer tray 204 includes a body 208 defining a plurality of cavities 210 (shells 210). Each respective shell of shells 210 is configured to receive an outer surface of a respective tooth. In this way, transfer tray is configured to align with the dentition of a patient. Each shell of shells 210 that is configured to receive a respective attachment of attachments 202, defines a respective recess (collectively, shell recesses 212) within shells 210 that is shaped to receive the respective attachment of attachments 202. For example, an interior surface 211 of shells 210 may define recesses 212. In some examples, shell recesses 212 may include a feature, such as an undercut or a protrusion, that is configured to engage with a corresponding feature on an attachment 202. For example, attachment body 102 may define a plurality of undercuts (e.g., tapered surface 103 and 105) and a surface of shell recesses 212 may define a protrusion configured to engage undercut. In this way, corresponding features on a respective attachment and shell recess may improve a security of attachments 202 while at least one of placing a plurality of attachments 202 into transfer tray 204, applying adhesive to bonding surface of attachments 202, or manipulating transfer tray 204 to position transfer tray 204 in the mouth of patient.

After positioning each respective attachment of attachments 202 in a respective shell recess of shell recesses 212, adhesive may be applied to bonding surface of each attachments 202. In some examples, dental adhesive used to bond attachments 202 to teeth 302 may include a light-cure adhesive, a chemical cure adhesive, a dual cure adhesive, 3M RELYX Ultimate Adhesive Resin Cement available from 3M Company (St. Paul, Minnesota), APC Flash-Free adhesive available from 3M Company (St. Paul, Minnesota), or the like. The adhesive may be selected for compatibility with the material used to fabricate the attachment body 102 to securely bond attachments 202 onto teeth. In some examples, shell recesses 212 may be shaped to position bonding surface 106 of attachments 202 relative to interior surface 211 of shells 210 to form a pocket. The pocket may include a selected depth, e.g., relative to interior surface 211, to retain a selected amount of adhesive for bonding attachments 202 to the teeth of the patient. In this way, the amount of adhesive may be controlled to reduce excessive adhesive use, which may result in flashing that must be removed, and/or to reduce insufficient adhesive use, which may compromise bonding strength.

After application of adhesive to attachments 202, transfer tray 204 may be positioned on the teeth of a patient. Then, in examples in which the dental adhesive includes a light cure adhesive, the clinician may direct a selected wavelength of radiation, e.g., actinic radiation, toward one or more of attachments 202 to cause a light-activating resin to set, thereby bonding attachments 202 to the tooth surface. In other examples, the clinician may use an activator or other means to initiate curing of the adhesive immediately before positioning transfer tray 204 of teeth or while transfer tray 204 is positioned on teeth.

The attachments of the present disclosure may be made of an aesthetic material such as a material that is translucent or transparent to light in the visible wavelengths. As another option, the attachments have a color that matches the color of the patient's adjacent dentition. If the attachment(s) are made of a transparent or translucent material, the material preferably transmits sufficient light to enable the color of the patient's underlying tooth to be visible through the front or labial side of the attachment.

The attachments of the present disclosure may be made of metal (such as alloys of stainless steel or other metallic materials), ceramic materials (including monocrystalline and polycrystalline light- transmitting ceramics) and polymeric materials (such as fiber-reinforced polycarbonate). Suitable ceramic materials are described, for example, in US Patent No. 6,648,638 (Castro et al.). Further, attachments may be formed entirely from a curable composite dental material, such as TRANSBOND brand light cure adhesive (available from 3M Company, St. Paul, MN), and cured in vivo on the patient's teeth using techniques such as those described in U.S. Patent Application Publication No. 2007/0031774 (Cinader, Jr., et al.). In certain presently preferred circumstances, the attachments integrally made as a unitary component by a metal injection molding or as part of an additive manufacturing process. Suitable materials for use in additive manufacturing of the attachment may include, but are not limited to, materials described in International PCT Publications WO 2020/104873 (Chakraborty et al.), WO 2019/048963 (Parkar et al.), WO 2018/231583 (Herrmann et al.), WO 2016/191534 (Mayr et a.), WO 2016/191162 (Mayr et a.), and WO 2014/078537 (Sun et al.). Other material iterations and combinations are also possible.

In some examples, the methods of the present disclosure may include a three-dimensional (3D) printing step in the creation of the attachment, the transfer tray, CTA, polymeric band, or any combination thereof. Three-dimensional printing may include, for example, forming the article from a plurality of layers of a photopolymerizable material described herein by selectively curing the photopolymerizable material in a layer-by-layer manner. In some examples, additive manufactured article may include a plurality of materials bonded to each other. The layers of the photopolymerizable material can be deposited according to an image of the three-dimensional article in a computer readable format. For example, the photopolymerizable material may be deposited according to preselected computer aided design (CAD) parameters (e.g., a data file). In some examples, the photopolymerizable material is cured using actinic radiation, such as UV radiation, e-beam radiation, visible radiation, or combinations thereof.

The foregoing techniques can be repeated a selected number of times to provide the 3D article. For example, in some cases, this process can be repeated "n" number of times. Further, it is to be understood that one or more steps of a method described herein, such as a step of selectively applying energy to a layer of photopolymerizable composition, can be carried out according to an image of the 3D article in a computer-readable format. Suitable stereolithography printers include the Viper Pro SLA, available from 3D Systems, Rock Hill, South Carolina; the Asiga PICO PLUS 39, available from Asiga USA, Anaheim Hills, California; the D30, available from Rapid Shape, Heimsheim, Germany; and the Moonray, available from SprintRay, Los Angeles, California.

Other techniques for three-dimensional manufacturing may be suitably adapted to the techniques described herein. More generally, three-dimensional fabrication techniques continue to become available and may be adapted to use with photopolymerizable compositions described herein, provided they offer compatible fabrication viscosities and resolutions for the specified article properties, for instance continuous additive manufacturing in which a build plate is (essentially) continuously moved through a vat of photopolymerizable material. In certain examples, an apparatus adapted to be used in a continuous mode may be employed, such as an apparatus commercially available from Carbon 3D, Inc. (Redwood City, CA), for instance as described in U.S. Patent Nos. 9,205,601 and 9,360,757 (both to DeSimone et al.). For example, in any method described above, selective curing of a photopolymerizable material includes continuous photopolymerization of at least one of the first portion of the article or the second portion of the article. Further details of methods for additive manufacturing may be found in co-owned application U.S. Provisional Application No. 62/954,278, filed December 27, 2019, "Preformed Orthodontic Aligner Attachments".

The present disclosure provides a variety of methods for making and using the attachments of the present disclosure. In one method, a pre-existing set of attachments is directly bonded to teeth using a placement guide, prescription, or the like. Typically, in such methods, the attachment is bonded to the FA point of the requisite tooth. Direct bonding can include placing a hardenable adhesive onto bonding surfaces of attachments. In some examples, the light-cure adhesive could be placed on the attachments. In some examples, other dental adhesives may be used, and the technique may include proper preparation and use of those adhesives (e.g., mixing of two part adhesives, application of curing agent, or the like).

In other embodiments, the attachments are secured to the teeth using digital (i.e., virtual) methods. The digitally enabled methods typically include receiving a digital representation of 3D tooth structure of a patient. This generally involves creating a representation of the patient's teeth and gums, and may involve taking wax bites, using impression materials, casting, direct contact scanning, x-ray imaging, tomographic imaging, sonographic imaging, and other techniques for obtaining information about the position and structure of the teeth, jaws, gums and other orthodontically relevant tissue. A digital data set can be derived from this data that represents a current arrangement of the patient's teeth and other tissues. A virtual model of the dentition may then be re-constructed based on the digital data. Data representing an article may be generated using computer modeling, such as computer aided design (CAD) data. Image data representing the article design can be exported in STL format, or in any other suitable computer processable format, to the additive manufacturing equipment. Scanning methods to scan a three-dimensional object may also be employed to create the data representing the article. One example technique for acquiring the data is digital scanning. Any other suitable scanning technique may be used for scanning an article, including X-ray radiography, laser scanning, computed tomography (CT), magnetic resonance imaging (MRI), and ultrasound imaging. Other possible scanning methods are described, e.g., in U.S. Patent Application Publication No. 2007/0031791 (Cinader, Jr., et al.). The initial digital data set, which may include both raw data from scanning operations and data representing articles derived from the raw data, can be processed to segment an article design from any surrounding structures (e.g., a support for the article).

Often, machine-readable media are provided as part of a computing device. The computing device may have one or more processors, volatile memory (RAM), a device for reading machine-readable media, and input/output devices, such as a display, a keyboard, and a pointing device. Further, a computing device may also include other software, firmware, or combinations thereof, such as an operating system and other application software. A computing device may be, for example, a workstation, a laptop, a tablet, a smart phone, a personal digital assistant (PDA), a server, a mainframe or any other general-purpose or application-specific computing device. A computing device may read executable software instructions from a computer-readable medium (such as a hard drive, a CD-ROM, or a computer memory), or may receive instructions from another source logically connected to computer, such as another networked computer.

Once a digital representation is acquired, the digitally enabled methods may progress to determining a treatment plan including targeted tooth positions and locations of attachments. For example, computing device executing 3D modeling software may render a resultant digital representation of the tooth structure, including the occlusal surface as well as the root structure of the patient's dental arch. Modeling software provides a user interface (e.g., a display, keyboard, and mouse) that allows the practitioner to manipulate digital representations of the teeth in 3D space relative to the digital representation of the dental arch of the patient. By interacting with the computer system, the practitioner generates treatment information, such as by selecting indications of the final positions of individual teeth of the patient, duration of a respective stage of treatment, or number of treatment stages, the direction or magnitude of forces on the teeth of the patient during a stage of treatment, or the like. For example, the final positions of individual teeth of the patient, duration of a respective stage of treatment, or number of treatment stages may affect the direction or magnitude of forces on the teeth of the patient at each stage of treatment by each removable dental appliance of the set of removable dental appliances. In some examples, orthodontic attachments may be used during at least one, but fewer than all stages of treatment. In some examples, the movements to be achieved, the forces applied, and the engagement of each tooth by each removable dental appliance of the set of removable dental appliances may be determined by selecting the dimensions, shapes, and positions of the orthodontic attachments and/or shells of a removable dental appliance. In this way, updating a database with diagnostic and treatment information may include determining or selecting by a clinician, a technician, or automatically by a computer the dimensions, shapes, and positions of the attachments and/or shells of each of removable dental appliance of the set of removable dental appliances to result in the desired movement of the teeth of the patient. In some examples, the technique optionally includes reviewing, e.g., by a dentist, clinician, or other technician, the treatment plan (1506). Systems and methods for generating a treatment plan incorporating CTAs or polymeric arch members can be found, for example, in U.S. Patent Nos. US 7,435,083 (Chisti, et al.), US 7,134,874 (Chisti, et al.), US 10,307,221 (Cinader, Jr.), 9,259,295 (Raby et al.); International Patent Publication No. WO2020/208559 (Raby et al.); and US Patent Publication No. 2005/0277084 (Lai et al). In some implementations, the desired final positions of the teeth may be determined by the placement and/or orientation of the attachments.

The digital data may be "cleansed" by removing any data points that represent clear error. For example, files in STL format representing a tooth surface that include a data point significantly outside the normal expected geometrical relationship of adjacent data points could be fixed by STL-handling software to remove the erroneous data point. In addition, tooth data points that are missing could be added by STL-handling software to create realistic, smoothly curved tooth shapes. Alternatively, or in addition to, the data cleansing may be carried out on the data file before conversion of the data to an STL file. As an additional option, data may also be obtained of hidden features of the patient, such as the roots of the patient's teeth and the jaw structure. For example, CT scanning techniques may be used to obtain data representative of the patient's entire tooth structure including the roots. The data obtained by CT scanning may then be "stitched together" with other data obtained by scanning the crowns of the patient's teeth with another scanning technique to provide a more comprehensive virtual representation.
Dentition surfaces may be segmented to produce one or more discrete, movable 3D tooth object models representing individual teeth. The tooth models may also be separated from the gingiva into separate objects. Segmentation allows a user to characterize and manipulate the teeth arrangement as a set of individual objects. Advantageously, the computer may derive diagnostic information such as arch length, bite setting, interstitial spacing between adjacent teeth, and American Board of Orthodontics (ABO) objective grading from these models.

A tooth coordinate system, defined by coordinate axes, can be defined for each discrete tooth surface in the virtual dental arch. The coordinate system may include a mesial-distal axis, a buccolabial-lingual axis, and an occlusal gingival axis for each tooth, with each axis computed as perpendicular to the other two axes. The coordinate system may be defined using computed or selected landmarks. Alternatively, the coordinate system may be created by defining a point on a virtual tooth, receiving axis input data that defines first and second axes associated with the virtual tooth, computing a substantially normal vector for a portion of the tooth surface surrounding the point, and computing the tooth coordinate system based on the axis input and the computed vector, Such methods, and well as other exemplary methods for creating tooth coordinate systems, are exemplified in US Patent No. 9,622,835 (Raby et al.). The tooth coordinate system allows for various modifications to one or more virtual teeth associated with the coordinate system. Aspects that may be adjusted or modified for each tooth include: torque, tip, 1st order rotation, mesial-distal movement (with or without interproximal reduction (IPR)), occlusal-gingival translation, and buccolabial-lingual translation. Each of these aspects relate to movement in one of the six degrees of freedom defined by the coordinate axes of the respective tooth surface. Such modification also includes the positioning and/or attachment of a virtual attachment or attachment analog to a tooth.

One or both of the occlusal and midsagittal planes of the dentition may be specified for the virtual model. The occlusal plane is an imaginary surface that passes through the occlusion of the teeth and is generally approximated by a plane. The midsagittal plane is an imaginary plane passing longitudinally through the middle of the dental arch, dividing it into left and right halves. An initial approximation of the occlusal plane may be based on the shapes or coordinate systems of some or all of the tooth surfaces belonging to an individual arch of the dentition. For example, the occlusal plane may be defined by identifying three points that tangentially contact a plane superimposed on the dentition. For a given dental arch, the three points generally include at least one contact point from a left molar, one contact point from a right molar, and one contact point from a central or lateral tooth. In another embodiment, the occlusal plane is defined as a best-fit plane to the points representing the origins of the tooth coordinate systems, as previously defined. In effect, this plane represents the average of these origins, which are generally positioned at the incisal edges, single cusp tips, or buccal cusp tips of the teeth. The occlusal plane may also be used to calculate and define the vertical axis of the model.

Similarly, the midsagittal plane may be derived based on the shape of the archform according to the coordinate systems of the tooth surfaces of the dentition. Manual adjustments of the occlusal and midsagittal planes to the locations and/or orientations relative to the dentition surface can be made as desired.

Optionally, and once the initial data set is processed and before attachments are placed on the virtual arch, the desired positions of the teeth in the patient's dental arch may be determined. Desired final positions of the teeth can be received, e.g., from a practitioner in the form of a descriptive prescription, can be calculated using orthodontic prescriptions, or can be extrapolated computationally from a clinical prescription. With a specification of the desired final positions of the teeth and a digital representation of the teeth themselves, the final position and surface geometry of each tooth can be specified to form a complete model of the teeth at the desired end of treatment or treatment stage. The result of this step is a set of digital data structures that represents a desired and/or orthodontically correct repositioning of the modeled teeth relative to presumed-stable tissue.

The method of the present disclosure may also include identifying a set of physical tooth attachments to effectuate the treatment plan. The identifying step may include the selection of pre-manufactured attachments based on prescription (e.g., in/out, torque, angulation). The identifying step may include manufacturing, based on the determined unique digital attachments model for each tooth, a set of the tooth attachments of the present disclosure. As discussed above, manufacturing the tooth attachments may include three-dimensional printing. In other example, manufacturing the attachments may include other methods, such as, for example, injection molding or subtractive manufacturing (e.g., milling). In some examples, the providing step involves acquiring a set of attachments from pre-existing inventory.

The methods of the present disclosure can also include modifying the digital tooth data to add attachment analogs to teeth at each location where attachment is placed and saving digital models of maloccluded tooth arches with added attachment analogs (1512). As discussed above, a transfer tray includes shells configured to receive a selected number of teeth and recesses (e.g., pockets) within selected shells to receive an attachment body. The methods optionally include manufacturing positive mockups of maloccluded tooth arches with added attachment analogs, as described in International Patent Publication No. IB2020/058481 (Dufour et al.). Manufacturing the models of maloccluded tooth arches with added attachment analogs may include three-dimensional printing. In other example, manufacturing the models of maloccluded tooth arches with added attachment analogs may include other manufacturing methods, such as, for example, injection molding or subtractive manufacturing (e.g., milling).

A variety of treatment planning systems exist which allow for designing and/or placing virtual appliances relative to a virtual dental arch with computer aid. Such systems are, for example, described in US Patent Nos. 7,210,929 (Raby et al.), 7,811,087 (Wiechmann et al.), and 7,993,133 (Cinader et al.). The virtual attachments may be at least partially designed and/or retrieved from a database. Each attachment or analog may be automatically and/or manually positioned relative to a virtual tooth in the virtual dental arch. Examples of systems for automatically placing and/or adjusting virtual appliances are described in U.S. Patent Nos. 7,210,929 (Raby, et al.), 7,940,258 (Raby et al.) and 8,517,727 (Raby, et al.).

The desired locations for the attachment/analog on the model can be determined in any of a number of ways. For example, a user at an appliance manufacturer's facility may use modeling software to place analogs/appliances on a model of the patient's dental arch based on standards or guidelines from an orthodontic treatment philosophy, such as the straight wire technique outlines above. These standards or guidelines for appliance placement may be specific to each tooth in the model. A user may also place attachments/analogs in accordance with particular instructions provided by a different treating professional. Each attachment and each tooth may be manipulated as a separate object within the virtual environment and fixed in the position of each bracket within the environment relative to the coordinate system associated with the tooth of the corresponding bracket. Assuming the final positions meet with approval, the virtual analogs may be placed at locations corresponding to the virtual attachments.

In an exemplary implementation, the virtual analog is obtained based on (for example by modification of) a virtual attachment of the present disclosure, which is typically standardized by prescription and available "off-the-shelf". The person skilled in the art will however recognize that the present methods and systems may likewise be used in combination with lingual and labial attachments that may be customized for each tooth of each patient, or a combination of custom and standard attachments. In one implementation, virtual attachments are selected from a library of pre-existing bracket constructions. Such fully-constructed appliances can be stored and accessible as CAD or STL files, for example. The appliance data can be either scanned in using above-described scanning technologies or generated directly with 3D data from published appliance profiles or other manufacturing specifications.

The virtual attachments can be used to generate the set of analogs based thereon. Each analog of the set of analogs is associated with a virtual attachment of the virtual set of attachments, and in certain cases represents a modification thereof. In one embodiment, a modification step comprises increasing a three-dimensional volume represented by the virtual appliance by selectively modifying only a portion of the appliance. For example, the modification step may comprise a flattening or reduction of an indentation present in the appliance shape. The modification step may further comprise at least partially filling a space between portions of the attachment shape or adding a virtual structure to the appliance shape. Undercuts, which may otherwise hinder the placement of the attachments into the tray or eventually prevent a transfer tray from being removed, may be minimized or removed. Further the modification step may comprise optionally reducing the three-dimensional volume by selectively modifying another portion of the attachment. For example, the modification step may comprise a rounding of an edge to account for abrasion of a physical attachment during a surface treatment step (for example during deflashing or polishing). Further the modification step may comprise maintaining or substantially of at least a portion of the original virtual attachment shape. The shape of each virtual analog may substantially correspond at least partially to the shape of one virtual attachments of the virtual set of attachments. The person skilled in the art will recognize various possibilities for modifying a shape, for example by change of an existing shape, adding or removing a shape, virtually copying, cutting, extending, reducing or another suitable technique. The skilled person will further be able to create a set of analogs in any suitable manner, for example by functions available on a CAD system, to provide a set of analogs in which the shape of at least one of the analogs differs from the shape of the associated appliance.

Appliance analogs may be stored as rendered in an accessible library or generated subsequent to retrieval based on an intended location of the attachment on the dental arch.

A virtual mockup may be provided by combining the virtual dental arch and the set of virtual analogs, for example being merged or superimposed by computer aid. The virtual mockup, which is preferably present in the form of a computer processable three-dimensional data file may be transmitted to an additive manufacturing machine which manufactures the physical mockup based on the virtual mockup. Alternatively, the components of the virtual mockup may be transmitted to the additive manufacturing machine and created separately, with a technician responsible for placement and coupling of the physical analog(s) or "off-the-shelf" attachments to a physical dental arch. Such a method may rely on guides or other devices created on the physical arch to assist in analog placement, such as those described in US Patent Nos. 7,762,815 (Cinader et al.) and 8,235,717 (Kuperman). Analogs or attachments may be held in place during formation of the transfer tray, for example, by a temporary adhesive or by friction fit with the guides as described, for example, in U.S. Patent 7,762,815. Such methods may be particularly desirable when the prescribed attachments are selected from a pre-existing, physical inventory.

The physical mockup can be made of a light curable material but may in other examples be made of a plastic material (for example molten from a plastic fiber), metal, gypsum, cement or other chemically hardenable materials. Manufacturing may further include post-processing to remove uncured resin and remove support structures, or to assemble various components.

Once the physical mockup is generated to satisfaction, a transfer apparatus may be created over said mockup. This may include sending instructions to a pressure forming or thermoforming machine to cause one or more sheets of material to be pressure formed or thermoformed over the physical mockup to form a negative replica or shell. The sheet may be, for example, a sheet of deformable plastic (e.g., an elastic thermoplastic). The sheet of material may be heated to a temperature at which the sheet becomes pliable. Pressure may concurrently be applied to the sheet to form sheet around the mockup. Once the sheet cools, it will have a shape that conforms to the mockup. An interior shape of the plastic shell substantially conforms to the patient's current dental arch. A release agent can be applied to the mockup before forming the plastic shell to facilitate later removal of the mold from the plastic shell. The shell can be trimmed by laser or mechanical milling techniques to remove excess or unwanted material.

The removable dental appliance or set of appliances (e.g., CTA or polymeric band) may be molded from thermoplastic or thermosetting material over the physical mockup in a manner similar to forming the transfer tray. A physical mockup may be formed for each stage of treatment, with or without attachment devices. In some embodiments, as described above, the removable dental appliance may be formed via additive manufacturing.

One exemplary method of making a tray includes the use of multiple sheet materials as described in US Patent No. 10,368,961 (Paehl et al.). The method includes placing elastic sheeting on top of the occlusal side of the teeth represented by the physical mockup, with a plastic sheeting arranged on top of the elastic sheeting. The elastic sheeting and the plastic sheeting are deformed in directions toward the physical mockup. This may be achieved by a vacuum generated beneath the elastic and plastic sheeting or a pressure above the elastic and plastic sheeting. At least the plastic sheeting maybe heated before and/or during the deformation. The plastic sheeting is typically allowed to solidify by cooling so as to provide it with a sufficient rigidity for handling.

The method can, in other embodiments, optionally include placing elastomeric spacer over maloccluded tooth arch models and thermoforming hard layer of transfer tray (such as, for example, PETG) the models of maloccluded tooth arches with added attachment receptacles. In another example, rather than manufacturing the models of maloccluded tooth arches with added attachment pockets and thermoforming the transfer tray, the technique may include additive manufacturing of the transfer tray.

After forming the transfer tray, the methods of the present disclosure can include placing the unique tooth attachments into corresponding pockets (e.g., receptacles) in a transfer tray. For example, a clinician or technician may use a tool such as a tweezer, a retaining ring pliers, or other suitable tool to engage a coupling portion of an article to insert at least an attachment body into a respective recess in the transfer tray. In some examples, placing the attachments may include placing, by a pick-and-place robot, the attachments in the transfer tray. In this way, forming the transfer tray may be automated.

The methods of using the attachment also include placing a hardenable adhesive onto bonding surfaces of attachments. In some examples, a light-cure adhesive could be placed on the attachments before loading into the transfer tray. In some examples, other dental adhesives may be used, and the technique may include proper preparation and use of those adhesives (e.g., mixing of two part adhesives, application of curing agent, or the like). The teeth may optionally be etched or primed before the transfer tray is seated on the arch.

Once the attachments are seated in the receptacles, the transfer tray may be placed onto the dental arch and the adhesive cured. For example, curing the adhesive may include curing with a light source, such as a dental irradiation device, curing with an activating agent, and/or waiting a duration of time. Once the adhesive is suitably cured, the tray may be removed from the patient's mouth.

Kits and assemblies of the appliance described are also contemplated herein. For example, one or more of the attachments described herein may be pre-coated with a suitable orthodontic adhesive and packaged in a container or a series of containers, as described for example in U.S. Patent Nos. 4,978,007 (Jacobs et al.); 5,015,180 (Randklev); 5,429,229 (Chester et al.); and 6,183,249 (Brennan, et al.), and U.S. Patent Publication No. 2008/0286710 (Cinader et al.).

## Claims

1. An orthodontic attachment device (100; 100a; 100b) comprising:
an attachment body (102; 102a; 102b) and a bonding surface (110; 110a; 110b) underlying the body, wherein the bonding surface is shaped to correspond to a contour of a portion of a tooth;
wherein the attachment body has the general shape of an inverted frustrum and the bonding surface is the underside of the attachment body,
wherein the attachment body includes mesial, distal, occlusal, and gingival side surfaces (103,103b,104,104b,105,105b,106,106b) extending between a facial surface (101,101b) of the body and the bonding surface, and
wherein each one of the side surfaces has a continuous, decreasing taper between the facial surface and the bonding surface so that the attachment body has a generally trapezoidal cross-sectional shape along both a mesial-distal and an occlusal-gingival axis.

2. The orthodontic attachment device of claim 1, wherein each of the side surfaces form a continuous undercut.

3. The orthodontic attachment device of claim 2, wherein the transition surface between any two side surfaces is arcuate.

4. The orthodontic attachment device of any of the prior claims, wherein the body does not include a slot or passage dimensioned to receive an archwire.

5. The orthodontic attachment device of any of the prior claims, wherein the bonding surface is shaped to bond at the facial axis of the clinical crown of the tooth.

6. The orthodontic attachment device of any of the previous claims, wherein the attachment body is dimensioned according to a prescription that represents particular characteristics of the attachment device including at least two defined prescription elements selected from in/out, torque and angulation.

7. A set of orthodontic attachment devices comprising:
a first attachment (100,100a,100b) having a first attachment body (102,102a,102b) and a first bonding surface (110,110a,110b), wherein the first attachment body has a first prescription (119,119a) that represents particular characteristics of the attachment device including at least two defined prescription elements selected from in/out, torque and angulation; and
a second attachment (100,100a,100b) having a second attachment body (102,102a,102b) and a second bonding surface (110,110a,110b), wherein the second attachment body has a second prescription (119,119a) that represents particular characteristics of the attachment device including at least two defined prescription elements selected from in/out, torque and angulation;
wherein the first prescription is different from the second prescription,
wherein each of the first and second attachment bodies has the general shape of an inverted frustrum and the bonding surface is the underside of the attachment body, wherein the bonding surface is shaped to correspond to a contour of a portion of a tooth,
wherein each attachment body includes mesial, distal, occlusal, and gingival side surfaces (103,103b,104,104b,105,105b,106,106b) extending between a facial surface (101,101b) of the body and the bonding surface, and
wherein each one of the side surfaces has a continuous, decreasing taper between the facial surface and the bonding surface so that the attachment body has a generally trapezoidal cross-sectional shape along both a mesial-distal and an occlusal-gingival axis.

8. The set of orthodontic attachment devices of claim 7, wherein each attachment device lacks a flared base.

9. The set of orthodontic attachment devices of claim 7 or 8, further comprising a third attachment having a third attachment body and a third bonding surface, wherein the third attachment body has a third prescription that represents particular characteristics of the attachment device including at least two defined prescription elements selected from in/out, torque and angulation, wherein the third prescription is different from either the first or second prescription.

## Patentansprüche

1. Eine kieferorthopädische Befestigungsvorrichtung (100; 100a; 100b), aufweisend:
einen Befestigungskörper (102; 102a; 102b) und eine unter dem Körper liegende Haftoberfläche (110; 110a; 110b), wobei die Haftoberfläche geformt ist, um einer Kontur eines Teils eines Zahns zu entsprechen;
wobei der Befestigungskörper die allgemeine Form eines umgekehrten Kegelstumpfs hat und die Haftoberfläche die Unterseite des Befestigungskörpers ist,
wobei der Befestigungskörper mesiale, distale, okklusale und gingivale Seitenoberflächen (103,103b,104,104b,105,105b,106,106b), die sich zwischen einer fazialen Oberfläche (101,101b) des Körpers und der Haftoberfläche erstrecken, aufweist, und
wobei jede einzelne der Seitenoberflächen eine kontinuierliche, abnehmende Verjüngung zwischen der fazialen Oberfläche und der Haftoberfläche hat, sodass der Befestigungskörper sowohl entlang einer mesialdistalen als auch einer okklusal-gingivalen Achse eine im Allgemeinen trapezförmige Querschnittsform hat.

2. Die kieferorthopädische Befestigungsvorrichtung nach Anspruch 1, wobei jede der Seitenoberflächen einen kontinuierlichen Hinterschnitt bildet.

3. Die kieferorthopädische Befestigungsvorrichtung nach Anspruch 2, wobei die Übergangsoberfläche zwischen zwei beliebigen Seitenoberflächen bogenförmig ist.

4. Die kieferorthopädische Befestigungsvorrichtung nach einem der vorstehenden Ansprüche, wobei der Körper keinen Schlitz oder Durchgang aufweist, der bemessen ist, um einen Bogendraht aufzunehmen.

5. Die kieferorthopädische Befestigungsvorrichtung nach einem der vorstehenden Ansprüche, wobei die Haftoberfläche geformt ist, um an der fazialen Achse der klinischen Krone des Zahns zu haften.

6. Die kieferorthopädische Befestigungsvorrichtung nach einem der vorstehenden Ansprüche, wobei der Befestigungskörper gemäß einer Verordnung bemessen ist, die besondere Eigenschaften der Befestigungsvorrichtung darstellt, aufweisend mindestens zwei definierte Verordnungselemente, die aus einwärts/auswärts, Drehmoment und Angulation ausgewählt sind.

7. Ein Satz kieferorthopädischer Befestigungsvorrichtungen, aufweisend:
eine erste Befestigung (100,100a,100b), die einen ersten Befestigungskörper (102,102a,102b) und eine erste Haftoberfläche (110,110a,110b) hat, wobei der erste Befestigungskörper eine erste Verordnung (119,119a) hat, die besondere Eigenschaften der Befestigungsvorrichtung darstellt, aufweisend mindestens zwei definierte Verordnungselemente, die aus einwärts/auswärts, Drehmoment und Angulation ausgewählt sind; und
eine zweite Befestigung (100,100a,100b), die einen zweiten Befestigungskörper (102,102a,102b) und eine zweite Haftoberfläche (110,110a,110b) hat,
wobei der zweite Befestigungskörper eine zweite Verordnung (119,119a) hat, die besondere Eigenschaften der Befestigungsvorrichtung darstellt, aufweisend mindestens zwei definierte Verordnungselemente, die aus einwärts/auswärts, Drehmoment und Angulation ausgewählt sind;
wobei sich die erste Verordnung von der zweiten Verordnung unterscheidet,
wobei jeder des ersten und des zweiten Befestigungskörpers die allgemeine Form eines umgekehrten Kegelstumpfs hat und die Haftoberfläche die Unterseite des Befestigungskörpers ist, wobei die Haftoberfläche geformt ist, um einer Kontur eines Teils eines Zahns zu entsprechen,
wobei jeder Befestigungskörper mesiale, distale, okklusale und gingivale Seitenoberflächen (103,103b,104,104b,105,105b,106,106b), die sich zwischen einer fazialen Oberfläche (101,101b) des Körpers und der Haftoberfläche erstrecken, aufweist, und
wobei jede einzelne der Seitenoberflächen eine kontinuierliche, abnehmende Verjüngung zwischen der fazialen Oberfläche und der Haftoberfläche hat, sodass der Befestigungskörper sowohl entlang einer mesialdistalen als auch einer okklusal-gingivalen Achse eine im Allgemeinen trapezförmige Querschnittsform hat.

8. Der Satz kieferorthopädischer Befestigungsvorrichtungen nach Anspruch 7, wobei jeder Befestigungsvorrichtung eine ausgestellte Basis fehlt.

9. Der Satz kieferorthopädischer Befestigungsvorrichtungen nach Anspruch 7 oder 8, ferner aufweisend eine dritte Befestigung, die einen dritten Befestigungskörper und eine dritte Haftoberfläche hat, wobei der dritte Befestigungskörper eine dritte Verordnung hat, die besondere Eigenschaften der Befestigungsvorrichtung darstellt, aufweisend mindestens zwei definierte Verordnungselemente, die aus einwärts/auswärts, Drehmoment und Angulation ausgewählt sind, wobei sich die dritte Verordnung von entweder der ersten oder der zweiten Verordnung unterscheidet.

## Revendications

1. Dispositif de fixation orthodontique (100 ; 100a ; 100b) comprenant :
un corps de fixation (102 ; 102a ; 102b) et une surface de collage (110 ; 110a ; 110b) sous-jacente au corps, dans lequel la surface de collage est formée pour correspondre au contour d'une partie d'une dent ;
dans lequel le corps de fixation a la forme générale d'un tronc de cône inversé et la surface de collage est la face inférieure du corps de fixation,
dans lequel le corps de fixation comporte des surfaces latérales mésiales, distales, occlusales et gingivales (103, 103b, 104, 104b, 105, 105b, 106, 106b) s'étendant entre une surface faciale (101, 101b) du corps et la surface de collage, et
dans lequel chacune des surfaces latérales a une conicité continue et décroissante entre la surface faciale et la surface de collage, de sorte que le corps de fixation présente une section transversale de forme généralement trapézoïdale le long d'un axe mésial-distal et d'un axe occlusal-gingival.

2. Dispositif de fixation orthodontique selon la revendication 1, dans lequel chacune des surfaces latérales forme une contre-dépouille continue.

3. Dispositif de fixation orthodontique selon la revendication 2, dans lequel la surface de transition entre deux surfaces latérales est arquée.

4. Dispositif de fixation orthodontique selon l'une quelconque des revendications précédentes, dans lequel le corps ne comporte pas de fente ou de passage dimensionné pour recevoir un fil d'arc.

5. Dispositif de fixation orthodontique selon l'une quelconque des revendications précédentes, dans lequel la surface de collage est formée pour coller à l'axe facial de la couronne clinique de la dent.

6. Dispositif de fixation orthodontique selon l'une quelconque des revendications précédentes, dans lequel le corps de fixation est dimensionné selon une prescription qui représente des caractéristiques particulières du dispositif de fixation, y compris au moins deux éléments de prescription définis choisis parmi l'entrée et la sortie, le couple et l'angulation.

7. Ensemble de dispositifs de fixation orthodontique comprenant :
un premier élément de fixation (100, 100a, 100b) ayant un premier corps de fixation (102, 102a, 102b) et une première surface de collage (110, 110a, 110b), dans lequel le premier corps de fixation présente une première prescription (119, 119a) qui représente des caractéristiques particulières du dispositif de fixation, y compris au moins deux éléments de prescription définis choisis parmi l'entrée/sortie, le couple et l'angulation ; et
une deuxième fixation (100, 100a, 100b) ayant un deuxième corps de fixation (102, 102a, 102b) et une deuxième surface de collage (110, 110a, 110b),
dans lequel le deuxième corps de fixation a une deuxième prescription (119, 119a) qui représente des caractéristiques particulières du dispositif de fixation, y compris au moins deux éléments de prescription définis choisis parmi l'entrée/sortie, le couple et l'angulation ;
dans lequel la première prescription est différente de deuxième prescription,
dans lequel chacun des premier et second corps de fixation a la forme générale d'un tronc de cône inversé et la surface de collage est la face inférieure du corps de fixation, dans lequel la surface de collage est formée pour correspondre au contour d'une partie d'une dent,
dans lequel chaque corps de fixation comporte des surfaces latérales mésiales, distales, occlusales et gingivales (103, 103b, 104, 104b, 105, 105b, 106, 106b) s'étendant entre une surface faciale (101, 101b) du corps et la surface de collage, et
dans lequel chacune des surfaces latérales présente une conicité continue et décroissante entre la surface faciale et la surface de collage, de sorte que le corps de fixation présente une section transversale de forme généralement trapézoïdale le long d'un axe mésial-distal et d'un axe occlusal-gingival.

8. Ensemble de dispositifs de fixation orthodontique selon la revendication 7, dans lequel chaque dispositif de fixation est dépourvu de base évasée.

9. Ensemble de dispositifs de fixation orthodontique selon la revendication 7 ou 8, comprenant en outre un troisième dispositif de fixation ayant un troisième corps de fixation et une troisième surface de collage, dans lequel le troisième corps de fixation a une troisième prescription qui représente des caractéristiques particulières du dispositif de fixation, y compris au moins deux éléments de prescription définis choisis parmi l'entrée/sortie, le couple et l'angulation, dans lequel la troisième prescription est différente de la première ou de la deuxième prescription.
